# EUROPEAN PATENT APPLICATION

(11) **EP 2 983 229 A1**
(43) Date of publication of application: **10.02.2016**
(21) Application number: 15158352.3
(22) Date of filing: 10.03.2015
(51) Int. Cl.: H01M 4/13, H01M 4/62, H01M 4/131, H01M 10/0525

(54) **POSITIVE ELECTRODE COMPOSITION FOR RECHARGEABLE LITHIUM BATTERY, AND POSITIVE ELECTRODE FOR RECHARGEABLE LITHIUM BATTERY AND RECHARGEABLE LITHIUM BATTERY INCLUDING THE SAME**

(30) Priority: 05.08.2014 KR 20140100542
(71) Applicant: Samsung SDI Co., Ltd., Gyeonggi-do 446-902 (KR)
(72) Inventor: Kim, In, 446-902 Yongin-si (KR); Kim, Eun-Jung, 446-902 Yongin-si (KR); Yang, Sang-Woon, 446-902 Yongin-si (KR); Kim, Young-Eun, 446-902 Yongin-si (KR); Kim, Jae-Kyung, 446-902 Yongin-si (KR)
(74) Representative: Gulde & Partner

(57) **Abstract**

Disclosed are a positive electrode composition for a rechargeable lithium battery that includes a positive active material, a spherically shaped conductive material and a sheet-shaped conductive material, wherein the spherically shaped conductive material is included in an amount of 1.1 to 10 parts by weight based on 1 part by weight of the sheet-shaped conductive material, and a positive electrode for a rechargeable lithium battery and a rechargeable lithium battery including the same.

## Description

### BACKGROUND

### 1. Field

A positive electrode composition for a rechargeable lithium battery and a positive electrode for a rechargeable lithium battery and a rechargeable lithium battery including the same are disclosed.

### 2. Description of the Related Art

A rechargeable lithium battery includes positive and negative electrodes including a material that can reversibly intercalate/deintercalate lithium ions as positive and negative active materials and an organic electrolyte solution or a polymer electrolyte solution filled between the positive and negative electrodes. Herein, the positive and negative electrodes intercalate and deintercalate lithium ions and produce electrical energy through oxidation and reduction reactions.

A positive active material for the rechargeable lithium battery may mainly include an oxide consisting of lithium and a transition metal and having a structure capable of intercalating lithium, for example, a lithium cobalt-based oxide, a lithium manganese-based oxide, a lithium nickel-based oxide, a lithium iron phosphate-based compound, and the like.

This positive active material has low electrical conductivity and is mostly mixed with a conductive agent to prepare electrode slurry.

Recently, a high current density rechargeable lithium battery having high energy density per unit volume for being applied to an electric vehicle has been increasingly required. Accordingly, research on a method of improving cycle-life characteristics and rate capability at a low temperature and room temperature and securing safety of a rechargeable lithium battery as well as increasing current density of the rechargeable lithium battery is needed.

### SUMMARY

One embodiment provides a positive electrode composition for a rechargeable lithium battery realizing high current density, improving cycle-life characteristics, rate capability at a low temperature and room temperature, and safety, and decreasing a manufacturing cost per energy density.

Another embodiment provides a positive electrode for a rechargeable lithium battery including the positive electrode composition.

Yet another embodiment provides a rechargeable lithium battery including the positive electrode.

One embodiment provides a positive electrode composition for a rechargeable lithium battery that includes a positive active material, a spherically shaped conductive material and a sheet-shaped conductive material, wherein the spherically shaped conductive material is included in an amount of 1.1 to 10 parts by weight based on 1 part by weight of the sheet-shaped conductive material.

The spherically shaped conductive material may be included in an amount of 1 to 15 wt% based on the total amount of the positive electrode composition.

The sheet-shaped conductive material may be included in an amount of 0.1 to 5 wt% based on the total amount of the positive electrode composition.

The spherically shaped conductive material may be carbon black, ketjen black, acetylene black, aerogel, denka black, or a combination thereof.

The spherically shaped conductive material may have an average particle diameter of 1 nm to 500 nm.

The sheet-shaped conductive material may include sheet-shaped graphite, graphene, flake-shaped carbon, or a combination thereof.

The sheet-shaped conductive material may have a long diameter of 4 µm to 7 µm.

The positive electrode composition may further include a binder.

The positive active material may include a lithium manganese-based oxide, a lithium nickel-based oxide, a lithium cobalt-based oxide, a lithium nickel manganese-based oxide, a lithium nickel cobalt-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, a lithium vanadium phosphate-based compound, or a combination thereof.

Another embodiment provides a positive electrode for a rechargeable lithium battery including the positive electrode composition.

The positive electrode may have a loading level of 33 to 45 mg/cm².

Yet another embodiment provides a rechargeable lithium battery including the positive electrode; a negative electrode; and an electrolyte solution.

The rechargeable lithium battery may have a current density of 2 to 8 mA/cm².

Other embodiments are included in the following detailed description.

The positive electrode composition for a rechargeable lithium battery may realize a rechargeable lithium battery having high energy density per unit volume, having excellent cycle-life characteristics, rate capability at room temperature and a low temperature and safety, and decreasing a manufacture cost per energy density.

### BRIEF DESCRIPTION OF THE DRAWINGS

FIG. 1 is a scanning electron microscope (SEM) photograph showing the positive electrode according to Example 1.
FIG. 2 is a graph showing cycle-life characteristics of rechargeable lithium battery cells according to Examples 1 and 2 and Comparative Example 1.

### DETAILED DESCRIPTION

Hereinafter, embodiments are described in detail. However, these embodiments are exemplary, and this disclosure is not limited thereto.

A positive electrode composition for a rechargeable lithium battery according to one embodiment includes a positive active material, a spherically shaped conductive material and a sheet-shaped conductive material. Herein, the spherically shaped conductive material is included in an amount of 1 to 10 parts by weight based on 1 part by weight of the sheet-shaped conductive material.

Recently, as a battery having a high energy density per unit volume has been increasingly required, a high current density battery needs to be developed. However, when a conventional rechargeable lithium battery using a positive electrode composition prepared by mixing a positive active material, a spherically-shaped conductive material, a binder and the like is designed to have high current density by increasing a loading level, an electrode plate may be cracked or broken and become severely bent. On the other hand, the positive electrode composition according to one embodiment has excellent cycle-life characteristics, rate capability at a low temperature and room temperature, and safety as well as high electrical conductivity, an excellent binding force, a little swelling and high energy density per unit volume.

The positive electrode according to one embodiment includes a positive active material, a spherically shaped conductive material and a sheet shaped conductive material, while the conventional positive electrode includes a positive active material and a spherically shaped conductive material.

The positive electrode according to one embodiment shows lots of effective electron movements due to increased passages for the electrons and thus, improves rate capability at a low temperature, while the conventional positive electrode has lots of ineffective electron movements. In addition, when a cycle goes, the positive electrode according to one embodiment shows decreased swelling and has an increased passage for the effective electron movement and thus, improves cycle-life characteristics, while the conventional positive electrode shows swelling and an increased passage for the ineffective electron movement and thus, deteriorates cycle-life characteristics. Specific experiment data are illustrated in the following experimental materials illustrates in detail.

The positive electrode composition according to one embodiment may be applied to a rechargeable lithium battery to manufacture a high current density battery. Herein, the current density may be specifically 2 to 8 mA/cm², 2.4 to 8 mA/cm², or 2.4 to 5 mA/cm². In other words, the positive electrode composition may be used for a battery having current density ranging from 2 to 8 mA/cm², 2.4 to 8 mA/cm², or 2.4 to 5 mA/cm².

In addition, the positive electrode composition may increase the loading level of the positive electrode up to greater than or equal to 33 mg/cm². In other words, the positive electrode composition may be applied to a positive electrode having a loading level of greater than or equal to 33 mg/cm² and specifically, ranging from 33 to 45 mg/cm².

The spherically shaped conductive material is included in an amount of 1.1 to 10 parts by weight, specifically 1.1 to 9 parts by weight, 1.1 to 8 parts by weight, 1.1 to 7 parts by weight, 1.1 to 6 parts by weight, or 1.1 to 5 parts by weight based on 1 part by weight of the sheet-shaped conductive material. Herein, the positive electrode composition may show excellent electrical conductivity and adherence, and a rechargeable lithium battery including the same may show high current density, excellent cycle-life characteristics and the like.

The spherically shaped conductive material may be included in an amount of 1 to 15 wt%, specifically 1 to 10 wt%, 1 to 8 wt%, 1 to 6 wt%, 1 to 5 wt% based on the total amount of the positive electrode composition. Herein, the positive electrode composition may show excellent electrical conductivity and adherence, and a rechargeable lithium battery including the same may show high current density, excellent cycle-life characteristics and the like.

The sheet-shaped conductive material may be included in an amount of 0.1 to 5 wt%, specifically 0.1 to 4 wt%, 1 to 5 wt%, or 1 to 4 wt% based on the total amount of the positive electrode composition. Herein, the positive electrode composition may show excellent electrical conductivity and adherence, and a rechargeable lithium battery including the same may show high current density, excellent cycle-life characteristics and the like.

The spherically shaped conductive material may include, for example carbon black (for example ketjen black), acetylene black (for example denka black), a conductive aerogel, or a combination thereof.

The spherically shaped conductive material may have an average particle diameter of 1 nm to 500 nm, specifically 1 nm to 400 nm, 1 nm to 300 nm, 1 nm to 200 nm, 1 nm to 100 nm, or 10 nm to 100 nm. Herein, the positive electrode composition may show excellent electrical conductivity and adherence, and a rechargeable lithium battery including the same may show high current density, excellent cycle-life characteristics and the like.

The sheet-shaped conductive material may be, for example sheet-shaped graphite, graphene, flake-shaped carbon, or a combination thereof.

The sheet-shaped conductive material may have a long diameter of 4 µm to 7 µm. Herein, the positive electrode composition may show excellent electrical conductivity and adherence and decrease a swelling degree, and a rechargeable lithium battery including the same may show high current density, excellent cycle-life characteristics and the like. Herein, the long diameter indicates the longest diameter in the flat side of the sheet-shaped conductive material.

The positive electrode composition for a rechargeable lithium battery may further include a binder. The binder plays a role of well binding each component in the positive electrode composition and making the positive electrode composition well adhered to an electrode plate.

The binder may use any binder that has been currently used in a battery. For example, the binder may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or a combination thereof.

The binder may be included in an amount of 1 to 15 wt%, specifically 1 to 10 wt%, or 1 to 8 wt% based on the total amount of the positive electrode composition for a rechargeable lithium battery.

In addition, the binder may be included in an amount of 0.5 to 5 parts by weight, 0.5 to 4 parts by weight, 0.5 to 3 parts by weight, 0.5 to 2 parts by weight, or 1 to 2 parts by weight based on 1 part by weight of the spherically shaped conductive material. Herein, the positive electrode composition has an excellent binding force and excellent electrical conductivity.

The positive active material may be any positive active material that has been generally used for a rechargeable lithium battery. The positive active material may be a compound (lithiated intercalation compound) being capable of intercalating and deintercallating lithium. Specifically, the positive active material may be a composite oxide of lithium and metal of cobalt, manganese, nickel, or a combination thereof, that is to say lithium metal oxide.

For example, the positive active material may include a lithium manganese-based oxide, a lithium nickel-based oxide, a lithium cobalt-based oxide, a lithium nickel manganese-based oxide, a lithium nickel cobalt-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, a lithium vanadium phosphate-based compound, or a combination thereof.

The positive active material may be specifically compounds represented by the following chemical formulae.

LiₐA_{1-b}R_{b}D₂ (wherein, in the above chemical formula, 0.90 ≤ a ≤ 1.8 and 0 ≤ b ≤ 0.5); LiₐE₁-bR_{b}O_{2-c}D_{c} (wherein, in the above chemical formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above chemical formula, 0 ≤ b ≤ 0.5, 0 ≤ c ≤ 0.05); LiₐNi_{1-b-c}Co_{b}R_{c}D_{α} (wherein, in the above chemical formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein, in the above chemical formula, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein, in the above chemical formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein, in the above chemical formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein, in the above chemical formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above chemical formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above chemical formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above chemical formula, 0.90 ≤ a ≤ 1.8, 0 ≤ b ≤ 0.9, 0 ≤ c ≤ 0.5, 0 ≤ d ≤ 0.5 and 0.001 ≤ e ≤ 0.1); LiₐNiG_{b}O₂ (wherein, in the above chemical formula, 0.90 ≤ a ≤ 1.8 and 0.001 ≤ b ≤ 0.1); LiₐCoG_{b}O₂ (wherein, in the above chemical formula, 0.90 ≤ a ≤ 1.8 and 0.001 ≤ b ≤ 0.1); LiₐMnG_{b}O₂ (wherein, in the above chemical formula, 0.90 ≤ a ≤ 1.8 and 0.001 ≤ b ≤ 0.1); LiₐMn₂G_{b}O₄ (wherein, in the above chemical formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃(O ≤ f ≤ 2); Li_{(3-f)}Fe₂(PO₄)₃(0 ≤ f ≤ 2); LiFePO₄, LiFeₓMn₁₋ₓ (wherein, in the above chemical formula 0≤x<1); LiMnPO₄, LiCoPO₄, Li₃V₂(PO₄)₃, LiFePO₄(OH), or LiMnPO₄(OH).

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The compounds may have a coating layer on the surface, or may be mixed with another compound having a coating layer.

The coating layer may include an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known to those who work in the related field.

In another embodiment, a rechargeable lithium battery includes a positive electrode including the above positive electrode composition, a negative electrode, and an electrolyte solution.

The rechargeable lithium battery specifically includes a positive electrode; a negative electrode; a separator interposed between the positive electrode and the negative electrode; an electrolyte solution (not shown) impregnated the positive electrode, the negative electrode, and the separator; a battery case; and a sealing member sealing the battery case. The rechargeable lithium battery is manufactured by sequentially laminating a negative electrode, a positive electrode, and a separator, spirally winding them, and housing the spiral-wound product in a battery case.

The positive electrode includes a current collector and a positive active material layer formed on the current collector. The current collector may be Al, but is not limited thereto.

The positive active material layer includes the above positive electrode composition for a rechargeable lithium battery.

The negative electrode includes a current collector and a negative active material layer formed on the current collector.

The current collector may be a copper foil, a nickel foil, a stainless steel foil, a titanium foil, a nickel foam, a copper foam, a polymer substrate coated with a conductive metal, or a combination thereof.

The negative active material layer may include a negative active material, the binder composition, and optionally a conductive material.

The negative active material may include a material that reversibly intercalates/deintercalates lithium ions, a lithium metal, a lithium metal alloy, material being capable of doping and dedoping lithium, or a transition metal oxide.

The material that reversibly intercalates/deintercalates lithium ions may be a carbon material which may be any generally-used carbon-based negative active material in a lithium ion rechargeable battery, and examples thereof may be crystalline carbon, amorphous carbon, or mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, and Sn.

The material being capable of doping and dedoping lithium may be Si, SiOₓ (0 < x < 2), a Si-C composite, a Si-Q alloy (wherein Q is an alkali metal, an alkaline-earth metal, Group 13 to 16 elements, a transition metal, a rare earth element, or a combination thereof, and not Si), Sn, SnO₂, a Sn-C composite, Sn-R (wherein R is an alkali metal, an alkaline-earth metal, Group 13 to 16 elements, a transition metal, a rare earth element, or a combination thereof, and not Sn), and the like.

Specific elements of the Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. The transition metal oxide may be vanadium oxide, lithium vanadium oxide, and the like.

The binder improves binding properties of negative active material particles with one another and with a current collector. Examples of the binder may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and the like, but are not limited thereto.

The conductive material improves conductivity of an electrode. Any electrically conductive material may be used as a conductive material, unless it causes a chemical change, and examples thereof may be a carbon-based material such as natural graphite, artificial graphite, carbon black, acetylene black, ketjen black, carbon fiber and the like; a metal-based material such as a metal powder or a metal fiber and the like of copper, nickel, aluminum, silver, and the like; a conductive polymer such as a polyphenylene derivative, and the like; or a mixture thereof.

The negative and positive electrodes may be manufactured in a method of mixing the active material, a conductive material, and a binder to prepare an active material composition and coating the composition on a current collector, respectively. The electrode manufacturing method is well known, and thus is not described in detail in the present specification.

The electrolyte solution includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like, and the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. The ether-based solvent may be, for example dibutylether, tetraglyme, diglyme, dimethoxyethane, 2-methyltetrahydrofuran, tetrahydrofuran, and the like, and the ketone-based solvent may be cyclohexanone, and the like. The alcohol-based solvent may include ethanol, isopropyl alcohol, and the like. The aprotic solvent include nitriles such as R-CN (wherein R is a C2 to C20 linear, branched, or cyclic hydrocarbon group, and may include a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio may be controlled in accordance with a desirable battery performance.

The carbonate-based solvent is prepared by mixing a cyclic carbonate and a linear carbonate. The cyclic carbonate and the linear carbonate are mixed together in the volume ratio of 1:1 to 1:9. Within this range, performance of electrolyte may be improved.

The non-aqueous organic solvent of the present invention includes an aromatic hydrocarbon-based organic solvent as well as the carbonate based solvent. The carbonate-based and the aromatic hydrocarbon-based solvents may be mixed together in a volume ratio ranging from 1:1 to 30:1.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The non-aqueous organic solvent may further include vinylene carbonate in order to improve cycle-life of a battery.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the vinylene carbonate used to improve cycle life may be adjusted within an appropriate range.

The lithium salt is dissolved in the non-aqueous solvent and supplies lithium ions in a rechargeable lithium battery, and basically operates the rechargeable lithium battery and improves lithium ion transfer between positive and negative electrodes. The lithium salt include at least one supporting salt selected from LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂), wherein, x and y are natural numbers, LiCl, Lil, LiB(C₂O₄)₂ (lithium bis(oxalato) borate, LiBOB), or a combination thereof. The lithium salt may be used in a concentration of 0.1 to 2.0M. When the lithium salt is included at the above concentration range, an electrolyte may have excellent performance and lithium ion mobility due to optimal electrolyte conductivity and viscosity.

A separator may be present between the positive electrode and negative electrode according to kinds of a rechargeable lithium battery. The separator may use polyethylene, polypropylene, polyvinylidene fluoride or a multi-layer thereof, for example a polyethylene/polypropylene double-layered separator, a polyethylene/polypropylene/polyethylene triple-layered separator, a polypropylene/polyethylene/polypropylene triple-layered separator, and the like.

In addition, another embodiment provides power plants, driving gears, or means of transportation manufactured by applying the rechargeable lithium battery thereto.

The above rechargeable lithium battery has excellent cycle-life characteristics, output characteristics and safety as well as realizes high energy per volume unit and thus, may be appropriately applied to various kinds of power plants, driving gears, means of transportation and the like.

The means of transportation may include an automobile, an auto bike, a bike, and the like and particularly, an electric vehicle.

Hereinafter, examples of the present invention and comparative examples are described. These examples, however, are not in any sense to be interpreted as limiting the scope of the invention.

### Examples 1 to 3

### (Manufacture of Positive Electrode)

93 wt% of LiNi_{1/3}Co_{1/3}Mn_{1/3}O₂ (NCM) as a positive active material, 3 wt% of carbon black as a spherically-shaped conductive material, 1 wt% of flake-type carbon (SFG6, Timcal Greaphite & Carbon) as a sheet-shaped conductive material, and 3 wt% of polyvinylidene fluoride (PVdF) as a binder were put in N-methylpyrrolidone (NMP) as a solvent and then, mixed therewith. The obtained positive electrode composition was coated on an aluminum substrate and then, compressed, manufacturing a positive electrode.

Herein, current density, the number of a jelly-roll turn and a loading level were set as provided in the following Table 1.

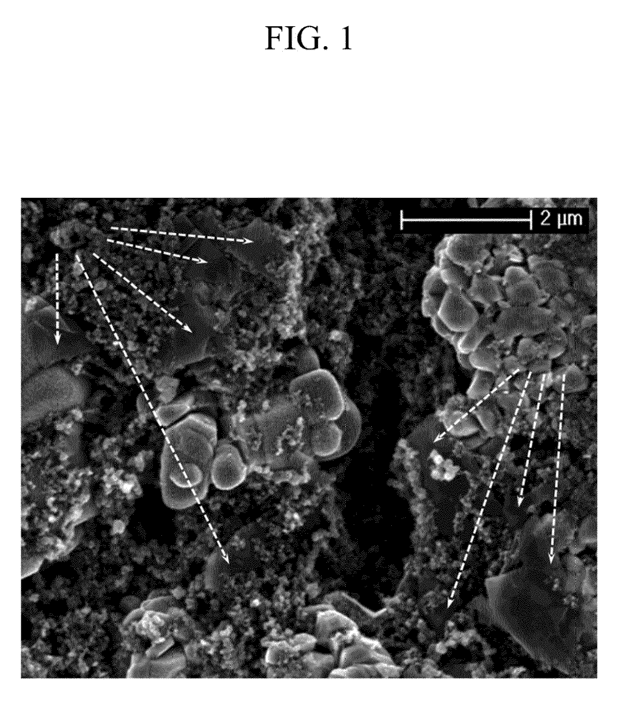

FIG. 1 is a scanning electron microscope (SEM) photograph showing the positive electrode according to Example 1. In FIG. 1, the part marked as an arrow indicates a sheet-shaped conductive material.

### (Manufacture of Rechargeable Lithium Battery Cell)

The positive electrode, a counter electrode manufactured by coating graphite on a copper substrate, a polypropylene separator and an electrolyte solution obtained by mixing and ethylene carbonate (EC): dimethyl carbonate (DMC): methylethyl carbonate (MEC) in a volume ratio of 1:1:1 and adding 1 mol/L LiPF₆ to the mixed solvent were used to manufacture a rechargeable lithium battery cell.

### Comparative Example 1

A positive electrode and a rechargeable lithium battery cell were manufactured according to the same method as Example 1 except for using 94 wt% of a positive active material, 3 wt% of a spherically-shaped conductive material and 3 wt% of a binder but no sheet-shaped conductive material during manufacture of the positive electrode. Current density, the number of a jelly-roll turn, loading level of the positive electrode were set as provided in Table 1.

The following Table 1 provides the composition and evaluation of the positive electrodes according to Comparative Example 1 and Examples 1 to 3.

**(Table 1)**

| | | Comparative Example 1 | Example 1 | Example 2 | Example 3 |
|---|---|---|---|---|---|
| Current density (mA/cm²) | | 2.50 | 2.47 | 2.67 | 2.88 |
| Number of a jelly-roll turn (turns) | | 16 | 16 | 15 | 14 |
| Positive electrode loading level (mg/cm²) | | 34.8 | 34.7 | 37.05 | 40.53 |
| Positive active material | | NCM | NCM | NCM | NCM |
| Positive electrode composition | Positive active material (wt%) | 94 | 93 | 93 | 93 |
| | Conductive material (wt%) | spherically-shaped conductive material 3 | spherically-shaped conductive material 3 sheet-shaped conductive material 1 | spherically-shaped conductive material 3 sheet-shaped conductive material 1 | spherically-shaped conductive material 3 sheet-shaped conductive material 1 |
| | Binder (wt%) | 3 | 3 | 3 | 3 |
| Positive electrode Evaluation | Binding force after drying (gf/mm) | 1.6 | 1.9 | 1.8 | 1.1 |
| | Specific resistance after drying (mΩ) | 19 | 8.8 | 7.9 | 5.7 |
| | Electrode plate quality | 1) Electrode plate was cracked and broken during assembly | 1) Electrode plate was not broken | 1) Electrode plate was not broken | 1) Electrode plate was not broken |
| | | 2) Electrode plate was severely bent | 2) Electrode plate was slightly bent | 2) Electrode plate was slightly bent | 2) Electrode plate was slightly bent |

### Evaluation Example 1: Properties of Positive Electrode

The binding force, specific resistance and electrode plate quality of the positive electrodes according to Comparative Example 1 and Examples 1 to 3 after the drying were evaluated, and the results are provided in Table 1.

The binding force was obtained by measuring a binding degree between a positive active material layer and a current collector with a tensile strength measuring instrument. The specific resistance is calculated through specific resistance after measuring resistance with an electrode plate conductivity measuring instrument.

Referring to Table 1, Example 1 and 2 showed an increased binding force after the drying compared with Comparative Example 1. Accordingly, the loading level of the positive electrode may be increased, and high current density may be designed.

In addition, Examples 1 to 3 showed decreased specific resistance after the drying compared with Comparative Example 1. Accordingly, cycle-life characteristics and rate capability at a low temperature and room temperature may be improved.

Examples 1 to 3 showed no broken and little bent electrode plate and thus, excellent quality of the electrode plate, while Comparative Example 1 showed a cracked or broken or severely bent electrode plate.

### Evaluation Example 2: Cycle-life Characteristics of Battery Cell

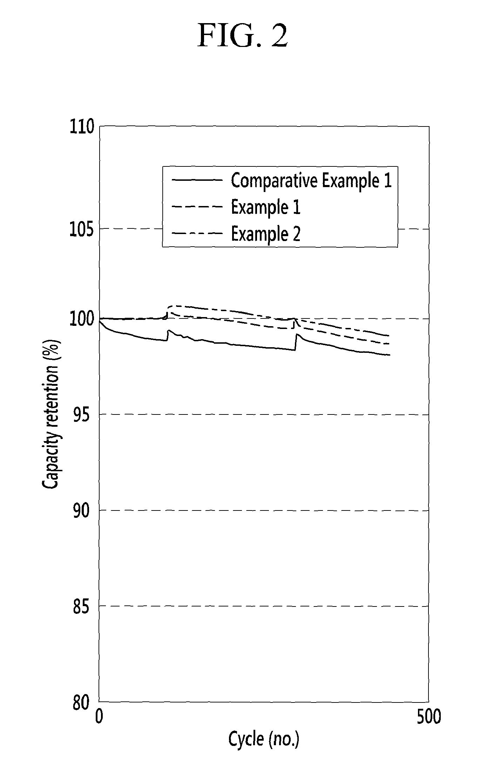

Cycle-life characteristics of the cells according to Examples 1 and 2 and Comparative Example 1 were evaluated at 25 °C under a condition of 1C/1C, and the results are provided in FIG. 2.

FIG. 2 is a graph showing cycle-life characteristics of the rechargeable lithium battery cells according to Examples 1 and 2 and Comparative Example 1.

Referring to FIG. 2, Examples 1 and 2 showed excellent cycle-life characteristics compared with Comparative Example 1.

## Claims

1. A positive electrode composition for a rechargeable lithium battery, comprising a positive active material, a spherically shaped conductive material, and a sheet-shaped conductive material,
wherein the spherically shaped conductive material is included in an amount of 1.1 to 10 parts by weight based on 1 part by weight of the sheet-shaped conductive material.

2. The positive electrode composition for a rechargeable lithium battery of claim 1, wherein the spherically shaped conductive material is included in an amount of 1 to 15 wt% based on the total amount of the positive electrode composition.

3. The positive electrode composition for a rechargeable lithium battery of claim 1 or 2, wherein the sheet-shaped conductive material is included in an amount of 0.1 to 5 wt% based on the total amount of the positive electrode composition.

4. The positive electrode composition for a rechargeable lithium battery of any of the preceding claims, wherein the spherically shaped conductive material comprises carbon black, acetylene black, a conductive aerogel, or a combination thereof.

5. The positive electrode composition for a rechargeable lithium battery of any of the preceding claims, wherein the spherically shaped conductive material has an average particle diameter of 1 nm to 500 nm.

6. The positive electrode composition for a rechargeable lithium battery of any of the preceding claims, wherein the sheet-shaped conductive material comprises sheet-shaped graphite, graphene, flake-shaped carbon, or a combination thereof.

7. The positive electrode composition for a rechargeable lithium battery of any of the preceding claims, wherein the sheet-shaped conductive material has a long diameter of 4 µm to 7 µm.

8. The positive electrode composition for a rechargeable lithium battery of any of the preceding claims, wherein the positive electrode composition further comprises a binder.

9. The positive electrode composition for a rechargeable lithium battery of any of the preceding claims, wherein the positive active material comprises a lithium manganese-based oxide, a lithium nickel-based oxide, a lithium cobalt-based oxide, a lithium nickel manganese-based oxide, a lithium nickel cobalt-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, a lithium vanadium phosphate-based compound, or a combination thereof.

10. A positive electrode for a rechargeable lithium battery, comprising the positive electrode composition of any of the preceding claims.

11. The positive electrode for a rechargeable lithium battery of claim 10, wherein the positive electrode has a loading level 33 to 45 mg/cm².

12. A rechargeable lithium battery, comprising
the positive electrode of claim 10 or 11;
a negative electrode; and
an electrolyte solution.

13. The rechargeable lithium battery of claim 12, wherein the rechargeable lithium battery has a current density of 2 to 8 mA/cm².
